# EUROPEAN PATENT SPECIFICATION

(11) **EP 3 795 292 B1**
(45) Date of publication and mention of the grant of the patent: **06.07.2022**
(21) Application number: 20186929.4
(22) Date of filing: 21.07.2020
(51) Int. Cl.: B23Q 3/08, B25B 11/00

(54) **MACHINE TOOL WITH IMPROVED SYSTEM FOR LOCKING WORKPIECES**
WERKZEUGMASCHINE MIT EINEM VERBESSERTEN WERKSTÜCKSPANNSYSSTEM
MACHINE-OUTIL AVEC UN SYSTEME DE SERRAGE DE PIECES AMELIORE

(30) Priority: 20.09.2019 IT 201900016838
(43) Date of publication of application: 24.03.2021
(73) Proprietor: SCM Group S.p.A., 47921 Rimini (RN) (IT)
(72) Inventor: MAZZA, Michele, 47921 RIMINI (RN) (IT); BAGGIARINI, Elia, 47921 RIMINI (RN) (IT)
(74) Representative: Tiburzi, Andrea

(56) References cited:
- EP-A1- 0 589 175
- EP-A1- 3 476 531
- US-A- 5 048 804

## Description

The present invention relates to a machine tool with improved system for locking workpieces.

More specifically, the invention relates to a machine tool comprising a working surface, on which the pieces (e.g. the panels) to be machined can be placed, and an improved system for locking, on this work surface, the pieces to be machined in order to guarantee the stability of the latter even during the various machining they are subjected to.

The improvement of the stability of the workpieces obviously implies a greater precision in the machining of the pieces themselves.

In the following the description will be directed to a machine tool for machining wooden panels, but it is clear that it should not be considered limited to this specific use, as it can also extend to pieces of different nature and/or shape.

Machine tools are known with a supporting surface to support the panels to be machined, see e.g. Patent Document EP 3 476 531 A1.

Normally, this supporting surface is provided with a series of holes distributed more or less uniformly on its surface and communicating with a chamber below them, connected in turn to a system for generating a vacuum, wherein each hole is equipped with a respective valve to allow or not the vacuum to reach the top surface of the supporting surface and therefore the panels arranged therein.

These known machine tools, however, show various drawbacks mainly connected to an imperfect stability of the panels during the machining they are subjected to.

This is essentially due to the fact that during the execution of through processing on the panels, the pressure in the aforementioned chamber increases progressively, due to the loss of seal between the panel and the supporting surface in the machining areas, and the consequent passage of atmospheric pressure air from the external environment towards the inside of the chamber.

Clearly, the pressure increase within the vacuum chamber will produce, as an effect, a worsening of the attractiveness of the panels to the supporting surface and, consequently, a stability loss of the panels themselves.

In light of the above, it is, therefore, an object of the present invention providing a machine tool with an improved system for locking workpieces, which allows to obtain a suitable stability of the pieces during the through machining they are subjected to.

Another object of the invention is to provide a machine tool with an improved system for locking pieces which allows performing through machining on the pieces with a high degree of pressure.

It is therefore specific object of the present invention a machine tool for machining workpieces which comprises: a supporting surface to allow, in use, placing at least one workpiece, a plurality of openings being formed in said supporting surface; a first chamber connectable with means for generating a depression; a second chamber which is unconnected with said first chamber and which is connectable with means for generating a depression; and a plurality of locking devices each connected with said first chamber, said second chamber and a respective opening of said openings of said supporting surface; each locking device comprising a movable element which is selectively movable at least to a first position, where said respective opening is in fluid communication with said first chamber but not with said second chamber, and a second position, where said respective opening is in fluid communication with said second chamber but not with said first chamber, such that when placing said at least one workpiece on said supporting surface in correspondence with a determined number of openings of said plurality of openings, said at least one workpiece is lockable on said supporting surface by an attraction force which is exerted by a depression which is in said first chamber and generated by said means for generating a depression, and/or by a depression which is in said second chamber and generated by said means for generating a depression.

Preferably according to the invention, said movable element is selectively movable also to a third position where said respective opening is closed by said movable element.

Conveniently according to the invention, said locking device may comprise a top portion where a through hole is formed which is in communication with the outside environment and said movable element, and in that said movable element comprises an upper portion which is such configured as to close said through hole when said movable element is in said third position.

Further according to the invention, said top portion of said locking device may comprise an upper surface which is substantially flush with said supporting surface.

Still according to the invention, said second chamber may be under said first chamber.

Advantageously according to the invention, in each locking device may be formed a cavity where said movable element is placed, in said locking device being formed at least one first hole connected with said first chamber and said cavity, and at least one second hole connected with said second chamber and said cavity.

Further according to the invention, said at least one first hole may be above said at least one second hole.

Preferably according to the invention, said movable element may comprise a side wall which is such configured as to close said at least one second hole while keeping said at least one first hole open when said movable element is in said first position, and to close said at least one first hole while keeping said at least one second hole open when said movable element is in said second position.

Further according to the invention, an upper surface and a lower surface may be provided in said movable element, and in that at least one through hole is formed in said movable element between said upper surface and said lower surface.

Still according to the invention, said movable element may be vertically movable, and in that said locking device comprises a guide element for guiding the vertical movement of said movable element.

The present invention will be now described, for illustrative but not limitative purposes, according to its preferred embodiments, with particular reference to the figures of the enclosed drawings, wherein:

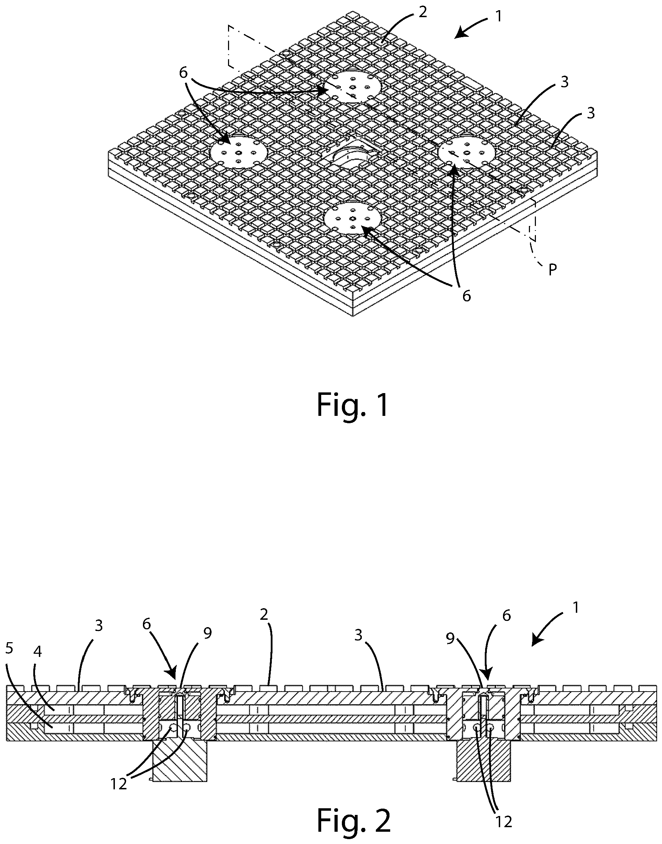

figure 1 is an isometric view of a portion of a working plane of a machine tool according to the present invention;
figure 2 is a sectional view according to the section plane P indicated in figure 1;

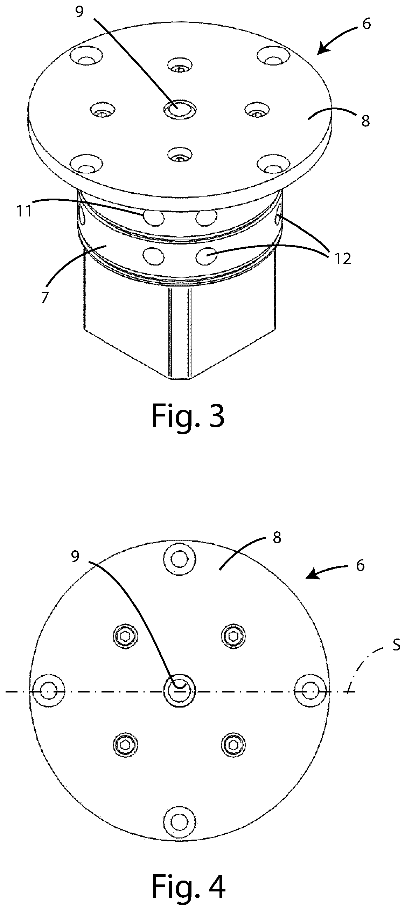

figure 3 is an axonometric view of a component forming part of the working plane shown in figures 1 and 2;
figure 4 is a top plan view of the component shown in figure 3;
figure 5 is a sectional view of the above-mentioned component in a rest configuration, according to the section line S indicated in figure 4;
figure 6 is a sectional view of the above-mentioned component in a first operating configuration, according to the section line S indicated in figure 4; and
figure 7 is a sectional view of the above-mentioned component in a second operating configuration, according to the section line S indicated in figure 4.

In the various figures, similar parts will be indicated by the same reference numbers.

With reference to the attached figures, with 1 it is indicated a portion of a working surface of a machine tool, that is, a surface for supporting panels or other types of workpieces.

This portion of a working surface 1 has an overall flat top surface 2 in which a plurality of rectilinear grooves 3, orthogonal to each other, are formed.

Under the top surface 2 there is an upper chamber 4 extending horizontally for almost all of said portion of a working surface 1, and communicating with a first device for generating a vacuum (not shown), such as for example a vacuum pump.

Below the upper chamber 4 there is a separate lower chamber 5 that is not communicating with the upper chamber 4, but connected to a second device for generating a vacuum (not shown), such as a vacuum pump, which could be the same device the upper chamber 4 is connected to, or another device.

In the aforementioned portion of a working plane 1 there is also a plurality of locking devices 6, uniformly distributed over the entire surface of the working plane and configured to allow the locking of the panels on this portion of a working plane 1.

Each locking device 6 comprises an external structure 7, internally hollow, having an upper surface 8, which is generally flat and arranged flush with the aforementioned top surface 2 of the portion of a working plane 1.

In the upper part of the external structure 7 of each locking device 6 there is an upper hole 9 communicating with said top surface 2 and with the internal cavity 10 of this external structure 7.

In the side wall of the external structure 7 a first plurality of side holes 11, communicating with the internal cavity 10 and with the upper chamber 4 of the worktop are formed, and a second plurality of side holes 12, communicating with the internal cavity 10 and with the lower chamber 5, this second plurality of side holes 12 being arranged under the first plurality of side holes 11.

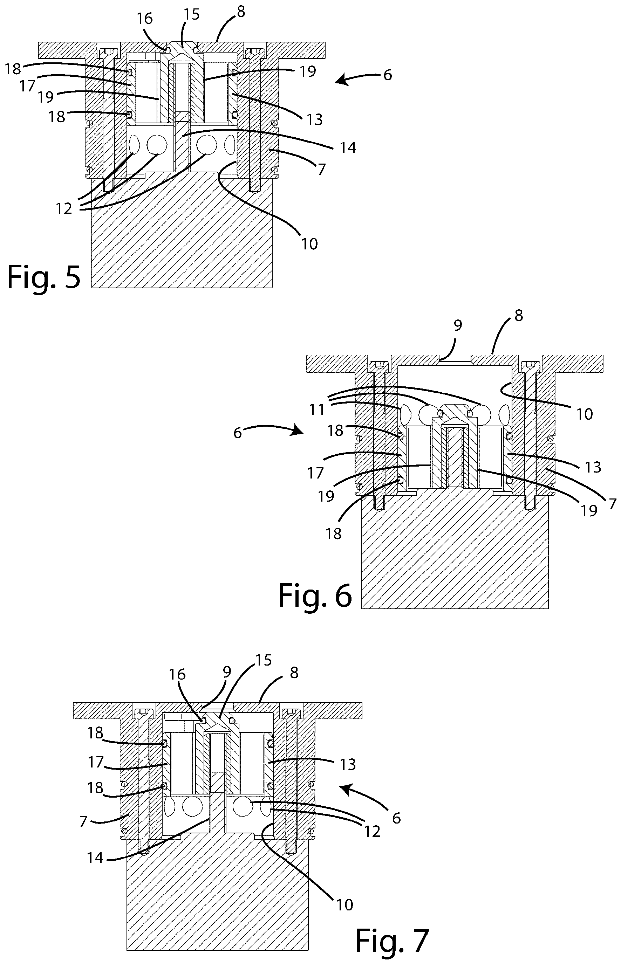

In the internal cavity 10 of each locking device 6 there is also a shutter member 13, movable vertically on a vertical guide screw-nut screw system 14, protruding from the lower part of the external structure 7, between a raised position (see fig. 5), in which the upper hole 9 and the first plurality of side holes 11 are closed by the shutter member 13, while the second plurality of side holes 12 is left open, a lowered position (see fig. 6), in which the second plurality of side holes 12 is closed by the shutter member 13, while the upper hole 9 and the first plurality of side holes 11 are left open, and an intermediate position (see fig. 7), in which the first plurality of side holes 11 is closed by the shutter member 13, while the upper hole 9 and the second plurality of side holes 12 are left open.

The shutter member 13 comprises an upper protruding portion 15, provided with a sealing gasket 16, and shaped in such a way as to close the aforesaid upper hole 9, when the shutter member 13 is in the relative raised position (see fig. 5).

The shutter member 13 also comprises a side wall 17, perimetrically closed, adhering to the side wall of the aforementioned external structure 7 and provided with one or more sealing gaskets 18.

In the shutter member 13 there is also a plurality of vertical through holes 19, provided between the upper protruding portion 15 and the side wall 17.

In particular, when the shutter member 13 is in the respective raised position (see fig. 5), the upper protruding portion 15 and the side wall 17 respectively close the upper hole 9 and the first plurality of side holes 11.

On the other hand, when the shutter member 13 is in the relative lowered position (see fig. 6), the side wall 17 closes the second plurality of side holes 12, leaving the first plurality of side holes 11 open, so that the depression generated by the aforementioned first device for generating a depression can propagate from the first plurality of side holes 11 to the upper hole 9.

On the other hand, when the shutter member 13 is in the aforementioned intermediate position (see fig. 7), the side wall 17 closes the first plurality of side holes 11, leaving the second plurality of side holes 12 open, so that the depression generated by the second device for generating a depression can propagate from the second plurality of side holes 12 to the upper hole 9, through the plurality of vertical through holes 19.

For each locking device 6 a movement system is provided to move the shutter member 13 in the above three positions, i.e. the raised position, the lowered position, and the intermediate position.

This movement system is in turn operatively connected to the control system of the machine tool in such a way that it is possible to independently move the shutter members 13 of all the locking devices 6 provided.

In case of it is necessary to perform through machining in the panel arranged on the working plane 1, it will be possible to have a suitable adherence of this panel to the working plane 1 by controlling the shutters 13 of the locking devices 6 underlying the areas of the panel not affected by the through machining, to arrange themselves in the respective lowered position (see fig. 6), and to the shutter members 13 of the locking devices 6 underlying the areas of the panel affected by the through machining to arrange themselves in the respective intermediate position (see fig. 7).

Alternatively, again in the case in which it is necessary to carry out workings passing through the panel arranged on the working plane 1, it will be possible to have a suitable adherence of this panel to the working plane 1 by controlling the shutters 13 of the locking devices 6 underlying the areas of the panel not affected by the through machining to arrange themselves in the respective intermediate position (see fig. 7), and to the shutter members 13 of the locking devices 6 underlying the areas of the panel affected by the through machining, to arrange themselves in the respective lowered position (see fig. 6).

In this way, the air at atmospheric pressure of the external environment will not be able to enter the chamber 4, 5 communicating with the locking devices 6 underlying the areas of the panel not affected by the through machining, since the upper holes 9 of these locking devices 6 are completely closed by the panel itself, thus ensuring the perfect adherence of these areas of the panel to the working plane 1.

The atmospheric pressure air of the external environment can instead enter the other chamber 4, 5 communicating with the locking devices 6 underlying the areas of the panel affected by the passing processes, due to the absence of sealing between these areas of the panel and the working plane 1, thus increasing the pressure in this chamber, but allowing to maintain, in any case, a suction force to attract said areas of the panel to the underlying working surface 1, so as to ensure adequate adherence of the panel itself.

To allow the removal of the machined panel from the working plane 1, instead, the propagation of the depression through the upper hole 9 must be interrupted by commanding the shutter members 13 underlying this panel to move to the respective raised position (see fig. 5).

Thanks to the particular structure of the machine tool described above, it will therefore be possible to obtain the maximum possible adherence between the panel being machined and the underlying working surface, even when performing through machining.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine tool for machining workpieces which comprises:
a supporting surface (1) to allow, in use, placing at least one workpiece, a plurality of openings being formed in said supporting surface (1);
a first chamber (4) connectable with means for generating a depression;
a second chamber (5) which is unconnected with said first chamber (4) and which is connectable with means for generating a depression; and
a plurality of locking devices (6) each connected with said first chamber (4), said second chamber (5) and a respective opening of said openings of said supporting surface (1); each locking device (6) comprising a movable element (13) which is selectively movable at least to a first position, where said respective opening is in fluid communication with said first chamber (4) but not with said second chamber (5), and a second position, where said respective opening is in fluid communication with said second chamber (5) but not with said first chamber (4), such that when placing said at least one workpiece on said supporting surface (1) in correspondence with a determined number of openings of said plurality of openings, said at least one workpiece is lockable on said supporting surface (1) by an attraction force which is exerted by a depression which is in said first chamber (4) and generated by said means for generating a depression, and/or by a depression which is in said second chamber (5) and generated by said means for generating a depression.

2. Machine tool according to claim 1, **characterized in that** said movable element (13) is selectively movable also to a third position where said respective opening is closed by said movable element (13).

3. Machine tool according to claim 2, **characterized in that** said locking device (6) comprises a top portion where a through hole (9) is formed which is in communication with the outside environment and said movable element (13), and **in that** said movable element (13) comprises an upper portion (15) which is such configured as to close said through hole (9) when said movable element (13) is in said third position.

4. Machine tool according to claim 3, **characterized in that** said top portion of said locking device (6) comprises an upper surface (8) which is substantially flush with said supporting surface (1).

5. Machine tool according to any one of preceding claims, **characterized in that** said second chamber (5) is under said first chamber (4).

6. Machine tool according to any one of preceding claims, **characterized in that** in each locking device (6) is formed a cavity (10) where said movable element (13) is placed, in said locking device (6) being formed at least one first hole (11) connected with said first chamber (4) and said cavity (10), and at least one second hole (12) connected with said second chamber (5) and said cavity (10).

7. Machine tool according to claim 6, **characterized in that** said at least one first hole (11) is above said at least one second hole (12).

8. Machine tool according to claim 6 or 7, **characterized in that** said movable element (13) comprises a side wall (17) which is such configured as to close said at least one second hole (12) while keeping said at least one first hole (11) open when said movable element (13) is in said first position, and to close said at least one first hole (11) while keeping said at least one second hole (12) open when said movable element (13) is in said second position.

9. Machine tool according to any one of preceding claims, **characterized in that** an upper surface and a lower surface are provided in said movable element (13), and **in that** at least one through hole (19) is formed in said movable element (13) between said upper surface and said lower surface.

10. Machine tool according to any one of preceding claims, **characterized in that** said movable element (13) is vertically movable, and **in that** said locking device (6) comprises a guide element (14) for guiding the vertical movement of said movable element (13).

## Patentansprüche

1. Werkzeugmaschine für die Bearbeitung von Werkstücken, umfassend:
eine Stützfläche (1), die bei der Verwendung von mindestens einem Werkstück die Ausbildung einer Vielzahl von Öffnungen in besagter Stützfläche (1) erlaubt;
eine erste Kammer (4), die mit Mitteln zur Erzeugung einer Vertiefung verbindbar ist;
eine zweite Kammer (5), die nicht mit besagter erster Kammer (4) verbunden ist und die mit Mitteln zur Erzeugung einer Vertiefung verbindbar ist; und
eine Vielzahl von Verriegelungsvorrichtungen (6), die jeweils mit besagter erster Kammer (4), besagter zweiter Kammer (5) und einer entsprechenden Öffnung besagter Öffnungen besagter Stützfläche (1) umfasst ein bewegliches Element (13), das selektiv bewegbar ist zu mindestens einer ersten Position, in der sich besagte entsprechende Öffnung in flüssiger Kommunikation mit besagter erster Kammer (4) befindet, aber nicht mit besagter zweiter Kammer (5), und einer zweiten Position, in der sich besagte entsprechende Öffnung in flüssiger Kommunikation mit besagter zweiter Kammer (5) befindet, aber nicht mit besagter erster Kammer (4), sodass, wenn besagtes mindestens eine Werkstück auf besagte Stützfläche (1) gelegt wird, in Übereinstimmung mit einer bestimmten Anzahl von Öffnungen besagter Vielzahl von Öffnungen, besagtes mindestens eine Werkstück auf besagter Stützfläche (1) durch eine Anzugskraft verriegelbar ist, die von einer Vertiefung ausgeübt wird, die sich in besagter erster Kammer (4) befindet und erzeugt wird durch besagte Mittel zur Erzeugung einer Vertiefung, und/oder durch eine Vertiefung, die sich in besagter zweiter Kammer (5) befindet und erzeugt wird durch besagte Mittel zur Erzeugung einer Vertiefung.

2. Werkzeugmaschine nach Anspruch 1, **dadurch gekennzeichnet, dass** besagtes bewegliche Element (13) auch selektiv zu einer dritten Position bewegbar ist, in der diese Öffnung durch besagtes bewegliche Element (13) geschlossen wird.

3. Werkzeugmaschine nach Anspruch 2, **dadurch gekennzeichnet, dass** besagte Verriegelungsvorrichtung (6) einen Oberteil umfasst, in dem ein Durchgangsloch (9) gebildet wird, das mit der Außenumgebung und besagtem beweglichen Element (13) in Verbindung steht, und darin, dass besagtes bewegliche Element ein Oberteil (15) umfasst, das so konfiguriert ist, dass es besagtes Durchgangsloch (9) verschließt, wenn sich besagtes bewegliche Element (13) in besagter dritter Position befindet.

4. Werkzeugmaschine nach Anspruch 3, **dadurch gekennzeichnet, dass** dieser Oberteil besagter Verriegelungsvorrichtung (6) eine obere Oberfläche (8) aufweist, die im Wesentlich bündig zu besagter Stützfläche (1) ist.

5. Werkzeugmaschine nach einem beliebigen der vorhergehenden Ansprüche, **dadurch gekennzeichnet, dass** sich besagte zweite Kammer (5) unter der besagten ersten Kammer (4) befindet.

6. Werkzeugmaschine nach einem beliebigen der vorhergehenden Ansprüche, **dadurch gekennzeichnet, dass** in jeder Verriegelungsvorrichtung (6) ein Hohlraum (10) gebildet wird, in dem besagtes bewegliche Element (13) platziert wird, wobei in besagter Verriegelungsvorrichtung (6) mindestens ein erstes Loch (11) geformt wird, das mit besagter erster Kammer (4) und besagtem Hohlraum (10) verbunden ist, und mindestens ein zweites Loch (12), das mit besagter zweiten Kammer (5) und besagtem Hohlraum (10) verbunden ist.

7. Werkzeugmaschine nach Anspruch 6, **dadurch gekennzeichnet, dass** sich besagtes mindestens eine erste Loch (11) oberhalb besagten mindestens einen zweiten Loches (12) befindet.

8. Werkzeugmaschine nach Anspruch 6 oder 7, **dadurch gekennzeichnet, dass** besagtes bewegliche Element (13) eine Seitenwand (17) umfasst, die so konfiguriert ist, dass besagtes mindestens eine zweite Loch (12) geschlossen wird, während besagtes mindestens eine erste Loch (11) geöffnet bleibt, wenn besagtes bewegliche Element (13) sich in besagter erster Position befindet, und dass besagtes mindestens eine erste Loch (11) geschlossen wird, während besagtes mindestens eine zweite Loch (12) geöffnet bleibt, wenn besagtes bewegliche Element (13) sich in besagter zweiter Position befindet.

9. Werkzeugmaschine nach einem beliebigen der vorhergehenden Ansprüche, **dadurch gekennzeichnet, dass** eine obere Fläche und eine untere Fläche in besagtem beweglichen Element (13) bereitgestellt werden, und darin, dass mindestens ein Durchgangsloch (19) in besagtem bewegelichen Element (13) zwischen besagter oberer Fläche und besagter unterer Fläche gebildet wird.

10. Werkzeugmaschine nach einem beliebigen der vorhergehenden Ansprüche, **dadurch gekennzeichnet, dass** besagtes bewegliche Element (13) vertikal bewegbar ist, und darin, dass besagte Verriegelungsvorrichtung (6) ein Führungselement (14) zum Führen der vertikalen Bewegung besagten beweglichen Elements (13) umfasst.

## Revendications

1. Machine-outil pour l'usinage des pièces qui comprend :
une surface de support (1) permettant, pendant l'utilisation, de placer au moins une pièce, une pluralité d'ouvertures étant formées sur ladite surface de support (1) ;
une première chambre (4) pouvant être raccordée avec des moyens pour générer une dépression ;
une seconde chambre (5) non connectée à ladite première chambre (4) et qui est connectée avec des moyens pour générer une dépression ; et
une pluralité de dispositifs de verrouillage (6) raccordés chacun à ladite première chambre (4), à ladite seconde chambre (5) et à une ouverture respective desdites ouvertures de ladite surface de support (1) ; chaque dispositif de verrouillage (6) comportant un élément mobile (13) qui est sélectivement mobile au moins vers une première position, lorsque cette ouverture respective est en communication fluidique avec ladite première chambre (4) mais pas avec ladite seconde chambre (5), et une deuxième position, lorsque ladite ouverture respective est en communication fluidique avec ladite seconde chambre (5) mais pas avec ladite première chambre (4), de sorte qu'en plaçant au moins une pièce à usiner sur ladite surface de support (1) au niveau d'un nombre déterminé d'ouvertures de ladite pluralité d'ouvertures, ladite au moins une pièce est verrouillable sur ladite surface de support (1) par une force d'attraction exercée par une dépression qui est dans la première chambre (4) et générée par lesdits moyens pour générer une dépression, et/ou par une dépression qui est dans la seconde chambre (5) et générée par lesdits moyens pour générer une dépression.

2. Machine-outil selon la revendication 1, **caractérisée en ce que** ledit élément mobile (13) est sélectivement mobile également vers une troisième position où cette ouverture respective est fermée par ledit élément mobile (13).

3. Machine-outil selon la revendication 2, **caractérisée en ce que** ledit dispositif de verrouillage (6) comprend une partie supérieure dans laquelle est ménagé un orifice passant (9) qui est en communication avec l'environnement extérieur et ledit élément mobile (13), et **en ce que** ledit élément mobile (13) comprend une partie supérieure (15) qui est configurée de manière à fermer ledit orifice passant (9) lorsque ledit élément mobile (13) se trouve dans ladite troisième position.

4. Machine-outil selon la revendication 3, **caractérisée en ce que** la partie supérieure dudit dispositif de verrouillage (6) comprend une surface supérieure (8) qui est sensiblement à ras de ladite surface de support (1).

5. Machine-outil selon l'une quelconque des revendications précédentes, **caractérisée en ce que** la seconde chambre (5) est sous ladite première chambre (4).

6. Machine-outil selon l'une quelconque des revendications précédentes, **caractérisée en ce que**, dans chaque dispositif de verrouillage (6) est formée une cavité (10) où ledit élément mobile (13) est placé, au moins un premier trou (11) relié à ladite première chambre (4) et à ladite cavité (10) étant ménagé dans ledit dispositif de verrouillage (6), ainsi qu'au moins un deuxième trou (12) relié à la seconde chambre (5) et à ladite cavité (10).

7. Machine-outil selon la revendication 6, **caractérisée en ce que** ledit au moins un premier trou (11) est au-dessus dudit au moins un deuxième trou (12).

8. Machine-outil selon la revendication 6 ou 7, **caractérisée en ce que** ledit élément mobile (13) comprend une paroi latérale (17) qui est configurée de façon à fermer ledit au moins un second trou (12) tout en maintenant ledit au moins un premier trou (11) ouvert lorsque ledit élément mobile (13) est dans cette première position, et fermer ledit au moins un premier trou (11) tout en maintenant ledit au moins un second trou (12) ouvert lorsque ledit élément mobile (13) se trouve dans ladite deuxième position.

9. Machine-outil selon l'une quelconque des revendications précédentes, **caractérisée en ce qu'**une surface supérieure et une surface inférieure sont prévues dans ledit élément mobile (13), et **en ce qu'**au moins un trou (19) est formé dans ledit élément mobile (13) entre ladite surface supérieure et ladite surface inférieure.

10. Machine-outil selon l'une quelconque des revendications précédentes, **caractérisée en ce que** ledit élément mobile (13) est verticalement mobile, et **en ce que** ledit dispositif de verrouillage (6) comprend un élément de guidage (14) pour guider le mouvement vertical dudit élément mobile (13).
